# EUROPÄISCHE PATENTSCHRIFT

(11) **EP 3 165 426 B1**
(45) Veröffentlichungstag und Bekanntmachung des Hinweises auf die Patenterteilung: **12.12.2018**
(21) Anmeldenummer: 16196784.9
(22) Anmeldetag: 02.11.2016
(51) Int. Cl.: B62D 21/11, B62D 21/15, B62D 29/00

(54) **BAUGRUPPE FÜR EIN KRAFTFAHRZEUG MIT EINEM HILFSRAHMEN UND EINER STOSSABSORPTIONSSTRUKTUR**
ASSEMBLY FOR A MOTOR VEHICLE WITH A SUBFRAME AND AN IMPACT ABSORPTION STRUCTURE
ENSEMBLE POUR UN VÉHICULE COMPRENANT UN CHÂSSIS SECONDAIRE ET UNE STRUCTURE D'ABSORPTION DE CHOCS

(30) Priorität: 09.11.2015 DE 102015119231
(43) Veröffentlichungstag der Anmeldung: 10.05.2017
(73) Patentinhaber: Kirchhoff Automotive Deutschland GmbH, 57439 Attendorn (DE)
(72) Erfinder: Töller, Marco, 51107 Köln (DE); Bartzik, Josef, 58644 Iserlohn (DE); Günther, Alexander, 57462 Olpe (DE)
(74) Vertreter: Haverkamp, Jens

(56) Entgegenhaltungen:
- DE-A1- 10 047 880
- DE-A1-102006 012 528
- DE-A1-102014 223 487
- DE-T2-602005 005 973
- US-A1- 2001 022 437

## Beschreibung

Die Erfindung betrifft eine Baugruppe für ein Kraftfahrzeug mit einem Hilfsrahmen zum Anschließen einer Radaufhängung, welcher Hilfsrahmen in Schalenbauweise ausgeführt ist und eine obere Schale und eine untere Schale aufweist, welche Schalen einen Schaleninnenraum einschließen und starr miteinander verbunden sind, und mit einer Stoßabsorptionsstruktur, wobei die Stoßabsorptionsstruktur ganz oder teilweise in den Schaleninnenraum des Hilfsrahmens nach Art eines Einlegers integriert und unverrückbar darin angeordnet ist.

Bei modernen Kraftfahrzeugen sind die Radträger in der Regel über Führungslenker (beispielsweise Querlenker) mit der Karosserie verbunden. Zur gelenkigen Lagerung solcher Führungslenker dient typischerweise ein so genannter Hilfsrahmen. Ein solcher Hilfsrahmen, auch als Fahrschemel oder Achsträger bezeichnet, ist seinerseits mit der Karosserie, beispielsweise mit den Längsträgern des Kraftfahrzeugs verbunden. Gleichwohl kann der Hilfsrahmen in z-Richtung betrachtet in einer anderen Ebene als die Längsträger, bevorzugt unterhalb davon, angeordnet sein. Der Hilfsrahmen kann auch weitere Bauteile aufnehmen. Über eine Pendelstütze kann er beispielsweise den Motor des Fahrzeugs abstützen.

An einen solchen Hilfsrahmen sind in manchen Fällen Stoßabsorp-tionsstrukturen angeschlossen, sodass die aus Hilfsrahmen und Stoßabsorptionsstruktur gebildete Baugruppe einen entsprechend größeren Bauraum in x-Richtung des Fahrzeuges benötigt. Bei einer solchen Ausgestaltung dient der Hilfsrahmen als Träger für den oder die Stoßabsorptionselemente der Stoßabsorptionsstruktur. Ein solcher Hilfsrahmen mit einem daran in Richtung der aufzunehmenden Aufprallenergie weisenden Stoßabsorptionsstruktur (Crashstruktur) ist beispielsweise aus DE 103 21 573 A1 oder aus DE 60 2006 000 566 T2 bekannt.

Derartige Baugruppen, umfassend einen Hilfsrahmen und eine daran entgegen der zu empfangenden Stoßrichtung angeschlossene Stoßabsorptionsstruktur, werden in zufriedenstellendem Maße eingesetzt. Bei zahlreichen Fahrzeugen steht im Bereich der Radaufhängungen vor allem auch in x-Richtung allerdings nur ein beschränkter Einbauraum zur Verfügung. Damit derartige Baugruppen auch bei beengten Einbauverhältnissen eingesetzt werden können, muss entweder der Hilfsrahmen und/oder die Stoßabsorptionsstruktur in x-Richtung des Fahrzeuges verkürzt werden. Dieses ist allerdings nicht immer möglich, vor allem dann nicht, wenn die den einzelnen Bestandteilen zugedachten Funktionalitäten, den Anforderungen entsprechend, erhalten werden sollen. Zudem wird es mitunter als nachteilig angesehen, dass eine solche Baugruppe eine nicht unbeträchtliche Anzahl von Einzelteilen benötigt, was sich auch in dem Gewicht einer solchen Baugruppe bemerkbar macht.

Die DE 60 2005 005 973 T2 offenbart einen Kraftfahrzeugträger mit wenigstens einer Schale aus gepresstem Blech, die einen hinteren Rand aufweist, der an einer vertikalen Wand der Karosserie angebracht werden soll. Dabei definiert wenigstens ein Abschnitt des hinteren Randes der Schale eine Abstützoberfläche, der bei einer Kollision mit der vertikalen Wand in Kontakt gelangen kann. Ein Ausführungsbeispiel zeigt einen zweischaligen Hilfsrahmen.

Die DE 10 2006 012 528 A1 offenbart eine Trägeranordnung für ein Fahrzeug, die sich aus einem äußeren Träger und einem in einem langgestreckten Hohlraum des äußeren Trägers angeordneten inneren Träger zusammensetzt. Dabei wird der innere Träger durch ein Strangpressprofil gebildet, das über Schraubbefestigungen am äußeren Träger gehalten ist und mehrere innenliegende Kammern aufweist. Die Kammern erstrecken sich vertikal und quer zur Längserstreckung des äußeren Trägers und es sind am Strangpressprofilteil mehrere innenliegende Aufnahmeabschnitte zur Schraubbefestigung vorgesehen.
Dokument DE 100 47 880 A1 offenbart eine Baugruppe gemäß dem Oberbegriff des unabhängigen Patentanspruchs 1.

Ausgehend von diesem diskutierten Stand der Technik liegt der Erfindung daher die Aufgabe zugrunde, eine Baugruppe für ein Kraftfahrzeug mit einem Hilfsrahmen zum Anschließen einer Radaufhängung vorzuschlagen, die, ohne Einbußen hinsichtlich der Radaufhängung und der aufzunehmenden Fahrwerkskräfte und/oder in der Auslegung der gewünschten Stoßabsorptionsstruktur in Kauf nehmen zu müssen, auch bei beengten Einbauverhältnissen eingesetzt werden kann und die zudem mehr Freiheitsgrade in der Auslegung eines Crashverhaltens eröffnet.

Gelöst wird diese Aufgabe erfindungsgemäß durch eine Baugruppe der eingangs genannten Art, bei der die Stoßabsorptionsstruktur zumindest ein mit seiner Längserstreckung in x-Richtung des Fahrzeuges ausgerichtetes Stoßabsorptionselement umfasst.

Bei dieser Baugruppe ist die Stoßabsorptionsstruktur im Unterschied zu vorbekannten Auslegungen nicht notwendigerweise in x-Richtung an den Hilfsrahmen angeschlossen, sondern ganz oder teilweise in diesen integriert. Die ganz oder teilweise Integration der Stoßabsorptionsstruktur in den Hilfsrahmen bezieht sich darauf, dass die an einer Stoßabsorption beteiligten Elemente eines Fahrzeuges sich insgesamt in dem Hilfsrahmen befinden können oder auch nur teilweise, was gleich bedeutend damit ist, dass neben einer in dem Hilfsrahmen integrierten Stoßabsorptionsstruktur an den Hilfsrahmen weitere für eine Stoßabsorption vorgesehene Elemente angeschlossen sein können oder auch zusammen mit der Baugruppe zu der Crashperformance des Fahrzeuges beitragen. Ausgenutzt wird bei diesem Konzept eine Schalenbauweise des Hilfsrahmens. Genutzt wird bei diesem Konzept in geschickter Weise somit der durch die Schalen gebildete Schaleninnenraum, um eine Stoßabsorptionsstruktur nach Art eines Einlegers darin zu integrieren und darin gegenüber den beiden Schalen des Hilfsrahmens unverrückbar anzuordnen. Durch diese integrierte Anordnung der Stoßabsorptionsstruktur in dem Schaleninnenraum des Hilfsrahmens ist der benötigte Bauraum in x-Richtung nicht notwendigerweise oder jedenfalls nicht in besonderem Maße vergrößert, verglichen mit einer vorbekannten Auslegung einer solchen Baugruppe, bei der die beiden Elemente - Hilfsrahmen und Stoßabsorptionsstruktur - in x-Richtung hintereinander angeordnet sind. Das vorstehende gilt für eine Ausgestaltung, bei der die gesamte Stoßabsorptionsstruktur innerhalb des Hilfsträgers angeordnet ist.

Durchaus besteht die Möglichkeit, die für eine Stoßabsorption vorgesehenen Elemente zum Teil innerhalb des Hilfsrahmens und zum anderen Teil in herkömmlicher Art und Weise außenseitig an den Hilfsrahmen anzubinden. In einem solchen Fall steht eine Verringerung des Einbauraums in x-Richtung nicht unbedingt im Vordergrund. Vielmehr öffnet diese Ausgestaltung die Möglichkeit, die Länge der an einer Stoßabsorption beteiligten Bauteile bzw. Baugruppen gegenüber herkömmlichen Ausgestaltungen in x-Richtung zu verlängern. Durch die Integration zumindest eines Teils der Stoßabsorptionsstruktur in den Hilfsrahmen dient dieser somit zusätzlich als Stoßabsorptionselement. Zudem wird hierdurch die Möglichkeit eröffnet, eine Stoßabsorption im Bezug auf zu absorbierende Kräfte unterschiedlichen an dem Aufbau der Gesamtstoßabsorptionsstruktur beteiligten Elementen zuzuordnen. Bei einer Ausgestaltung, bei der in Stoßaufnahmerichtung an den Hilfsrahmen weitere Stoßabsorptionselemente angeschlossen sind, können diese beispielsweise dergestalt ausgelegt sein, dass durch diese Elemente Stöße mit geringer Kraft absorbiert werden. An stärkeren Stößen wären diese in Stoßempfangsrichtung vorgeschalteten Stoßabsorptionselemente und der Hilfsrahmen mit seiner darin integrierten Stoßabsorptionsstruktur beteiligt. Vorteilhaft bei einem solchen Konzept ist, dass bei einem Aufprall von nur geringer Stärke der Hilfsrahmen in die Stoßabsorption nicht eingebunden ist und daher durch eine solche Stoßabsorption nicht deformiert wird. Folglich bräuchten in einem solchen Fall nur die vorderen, ohne Weiteres austauschbaren Stoßabsorptionselemente ausgewechselt zu werden, nicht jedoch der Hilfsrahmen. Daher ist in einer bevorzugten Ausgestaltung vorgesehen, dass dem Hilfsrahmen mit seiner darin integrierten Stoßabsorptionsstruktur in Stoßempfangsrichtung ein oder mehrere, typischerweise zwei Energieabsorptionselemente vorgeschaltet sind, wobei diese Stoßabsorptionselemente mit geringerer Kraft zum Zwecke einer Stoßabsorption deformierbar sind als der Hilfsrahmen mit seiner integrierten Stoßabsorptionsstruktur.

Darüber hinaus hat die Integration der Stoßabsorptionsstruktur in den Schaleninnenraum des Hilfsrahmens zudem den Vorteil, dass sich die an der Ausbildung des Hilfsrahmens beteiligten Bestandteile - die Schalen sowie die Stoßabsorptionsstruktur - hinsichtlich der ihnen zugedachten Funktionalitäten ergänzen können. Dieses und das Nachstehende gilt unabhängig davon, ob dem Hilfsrahmen zusätzlich Stoßabsorptionselemente entgegen der Stoßempfangsrichtung vorgeschaltet sind oder nicht. So kann die Stoßabsorptionsstruktur die Schalenstruktur verstärken, ohne dass hierzu, wie dieses beim Stand der Technik oftmals erforderlich war, besondere Strukturen oder zusätzliche Bauteile benötigt werden. Insofern kommt bei diesem Konzept der in den Hilfsrahmen integrierten Stoßabsorptionsstruktur bei einem normalen Fahrbetrieb des Fahrzeuges eine den Hilfsrahmen verstärkende Funktion zu. Durch die beschriebene Integration der Stoßabsorptionsstruktur in den Schaleninnenraum sind umgekehrt auch die beiden Schalen, zumindest in dem Abschnitt, in dem die Stoßabsorptionsstruktur angeordnet ist, in eine Stoßabsorption mit eingebunden. Dieses Zusammenspiel eröffnet völlig neue Freiheitsgrade in der Auslegung einer solchen Baugruppe. In Folge des sich gegenseitigen Ergänzens in den Funktionalitäten "Aufnahme von Fahrwerkskräften" und "Stoßabsorption" kann ein solcher Hilfsrahmen trotz der zahlreichen Möglichkeiten einer Auslegung, sogar gesteigerten Anforderungen genügen, mit einem geringen Gewicht hergestellt werden als herkömmliche Baugruppen mit diesen Funktionalitäten. Daher kann eine solche Baugruppe, wenn erforderlich, auch ausgelegt werden, dass der in x-Richtung benötigte Einbauraum sogar geringer ist, als derjenige eines herkömmlichen Hilfsrahmens alleine. Der durch Einsatz der beschriebenen Baugruppe gewonnene Einbauraum kann zum Einbau von anderen Baugruppen oder Aggregaten genutzt werden. Bei Elektro- und Hybridfahrzeugen sind in der Bodenstruktur oftmals Traktionsbatterien angeordnet, die durch eine solche Baugruppe im Crashfall besser geschützt sind. Zudem eignet sich die Verwendung eines solchen Hilfsrahmens im Front- und Heckbereich eines Fahrzeugs und vor allem auch für solche Fahrzeuge, die nur einen geringen Fahrzeugüberhang aufweisen.

Neben den bereits vorbeschriebenen Vorteilen eröffnet das Konzept der beanspruchten Baugruppe auch eine neuartige Auslegung einer solchen Stoßabsorptionsstruktur. Während vorbekannte Stoßabsorptionsstrukturen nur über zwei mit Abstand in y-Richtung zueinander angeordnete Stoßabsorptionselemente verfügen, die ihrerseits an den Fahrzeugrahmen, typischerweise als Verlängerung des Hilfsrahmens angeschlossen sind, sind diese beim Gegenstand der Erfindung zumindest anteilig im Schaleninnenraum des Hilfsrahmens integriert. Die Anordnung der Stoßabsorptionselemente im Schaleninnenraum kann dabei äußerst flexibel gehandhabt werden, da über den Hilfsrahmen die eingebrachten Kräfte in die Längsträger oder auch zwischen den Anbindungspunkten des Hilfsrahmens an die Längsträger anderweitig in die Karosserie eingeleitet werden. Insofern können mit einer solchen Baugruppe auch andere Lastpfade, als herkömmlich eingesetzt, für die Crashperformance genutzt bzw. vorgesehen werden. Zwar wird man bevorzugt auch in einer in x-Richtung betrachtet weitestgehend fluchtenden Verlängerung zumindest eines Teilabschnitts der Längsträger an den hinter den Stoßabsorptionselementen liegenden Anbindungspunkten jeweils ein Stoßabsorptionselement anordnen, dieses ist jedoch nicht unbedingt erforderlich. Vor dem Hintergrund des sich in y-Richtung erstreckenden Schaleninnenraums können auch an Positionen zwischen den beiden Längsträgern ein oder mehrere Stoßabsorptionselemente angeordnet sein. Bei mittig auf einen Stoßfänger wirkender Last, etwa gemäß dem sogenannten Pfahltest, wirkt eine solche Belastung sodann maßgeblich auf ein zwischen den Längsträgern angeordnetes Stoßabsorptionselement.

Die Integration der Stoßabsorptionsstruktur in den Schaleninnenraum gestattet eine Auslegung einzelner, am Aufbau der Stoßabsorptionsstruktur beteiligter Stoßabsorptionselemente mit unterschiedlichen Geometrien und/oder Strukturen, wie beispielsweise unterschiedlicher Querschnittsgeometrie und unterschiedlicher Erstreckung in x-Richtung oder auch in y-Richtung oder auch z-Richtung. So können beispielsweise im Bereich der weitestgehend fluchtenden Verlängerung der Längsträger angeordnete Stoßabsorptionselemente eine andere Querschnittsgeometrie aufweisen, insbesondere kleiner sein als ein beispielsweise mittig zwischen diesen beiden Stoßabsorptionselementen angeordnetes drittes Stoßabsorptionselement. Die Ausgestaltung der Stoßabsorptionsstruktur als Einleger in den Schaleninnenraum des in Schalenbauweise ausgeführten Hilfsrahmens eröffnet auch die Möglichkeit, dass den gewünschten Anforderungen entsprechend, in den Schaleninnenraum ein und desselben Hilfsrahmens unterschiedlich konzipierte Stoßabsorptionsstrukturen eingebaut werden. Dieses macht sich sodann an der Außenseite des Hilfsrahmens nicht bemerkbar, sodass diesbezüglich keinerlei Umbauten oder andere Auslegungen in Konzeption der Schalen erforderlich sind, auch wenn diese für unterschiedliche Fahrzeuge vorgesehen sind.

Bei Verwendung von einzelnen Stoßabsorptionselementen im Zusammenhang mit der Stoßabsorptionsstruktur ist es zweckmäßig, diese an ihrem von dem Stoß empfangenden Ende wegweisenden Ende an einen Stoßabsorptionselementträger anzuschließen. Bei diesem handelt es sich typischerweise um einen in y-Richtung verlaufenden Träger, vorzugsweise aus demselben Material wie die Stoßabsorptionselemente selbst. Zum Anschließen der Stoßabsorptionselemente an einen solchen Stoßabsorptionselementträger können die Stoßabsorptionselemente mit ihrer Stirnfläche an den Stoßabsorptionselementträger anstoßen und sind somit durch diese Maßnahme zugleich an dem Stoßabsorptionselementträger abgestützt. Verbunden sind die Stoßabsorptionselemente mit einem solchen Stoßabsorptionselementträger vorzugsweise durch Fügen, insbesondere einen Schweißprozess. Die Stoßabsorptionsstruktur eines bevorzugten Ausführungsbeispiels ist aus einer für solche Zwecke geeigneten Aluminiumlegierung hergestellt, beispielsweise einer Legierung aus der 6000er Gruppe gemäß der Klassifikation der Aluminum Association.

Die beiden Schalen des in Schalenbauweise ausgeführten Hilfsrahmens können ebenfalls aus einem Aluminiumwerkstoff hergestellt sein. Vorzugsweise handelt es sich hierbei um einen hochfesten Aluminiumwerkstoff, beispielsweise aus der 5000er oder 6000er Gruppe gemäß der Klassifikation der Aluminum Association. Durchaus möglich ist auch die Auslegung eines Hilfsrahmens, bei dem die Schalen aus einem Stahlwerkstoff hergestellt sind. Auch die Verwendung von faserverstärkten Kunststoffmaterialien zur Ausbildung der Schalen des Hilfsrahmens oder der Stoßabsorptionsstruktur oder von Teilabschnitten davon ist denkbar.

Sind die Schalen aus Metall gefertigt, sind diese vorzugsweise durch eine umlaufende Schweißnaht stoffschlüssig miteinander verbunden. Dabei kann vorgesehen sein, dass die Schalen bzw. die zu einander weisenden Seitenwandabschnitte auf Stoß aneinander liegen. Auch eine überlappende Anordnung ist durchaus möglich, ebenso wie das Vorsehen von nach außen abgekanteten Verbindungsflanschen. Im letzteren Fall können die Schalen anstelle einer Fügeverbindung auch miteinander verklebt und/oder durch Einsatz von Befestigern, beispielsweise Nieten miteinander verbunden sein. Diese Befestiger durchdringen die dann aneinander liegenden Verbindungsflansche der beiden Schalen.

Jeder der Schalen kann durchaus aus mehreren Einzelbestandteilen zusammengesetzt sein. Gemäß einer bevorzugten Ausführung ist jedoch vorgesehen, dass jede Schale einstückig hergestellt ist.

Zum unverrückbaren Anordnen der Stoßabsorptionsstruktur in dem Schaleninnenraum kann die Stoßabsorptionsstruktur mit einer der beiden Schalen verschweißt oder auf eine andere Art und Weise gefügt werden, bevor die andere Schale zum Verschließen des Schaleninnenraumes aufgesetzt und mit der ersten Schale ebenfalls verschweißt oder auf eine andere Art und Weise gefügt wird. Durch in zumindest eine der beiden Schalen eingebrachte Sicken und/oder Sickenreihen, wobei zwei in einer Reihe befindliche Sicken im Bereich der Anordnung eines Stoßabsorptionselementes voneinander beabstandet sind, damit die Enden der Sicken in ein dazwischen angeordnetes Stoßabsorptionselement eingreifen können erreicht man, dass grundsätzlich das Faltverhalten im Crashfall unterstützt wird und optional dazu kann eine Fixierung des Stoßabsorptionselementes und damit der Stoßabsorptionsstruktur in dem Schaleninnenraum in x-Richtung realisiert werden. An der von der stoßempfangenden Seite wegweisenden Seite kann sich die Stoßabsorptionsstruktur zusätzlich oder auch anstelle der vorbeschriebenen Fixierung an einem Anschlag oder einer Anschlagsanordnung abstützen. Beispielsweise kann es sich hierbei um die Schalen durchgreifende Halteglieder, wie beispielsweise Bolzen oder dergleichen handeln. Bei einer solchen Auslegung werden vorzugsweise solche Bolzen verwendet, die beispielsweise zur Aufhängung des Hilfsrahmens ohnehin benötigt werden. Anstelle oder auch ergänzend zu einer stoffschlüssigen Anbindung der Stoßabsorptionsstruktur an eine der beiden Schalen des Hilfsrahmens kann diese ebenfalls geklebt oder zwischen den beiden Schalen verpresst und/oder formschlüssig gehalten sein. Ein Anschluss der Stoßabsorptionsstruktur mittels Befestigern an eine Schale ist ebenfalls möglich, beispielsweise dann, wenn die an der Stoßabsorptionsstruktur beteiligten Elemente, wie beispielsweise die Stoßabsorptionselemente und ein Stoßabsorptionselementträger an ihrer zu der Schale weisenden Seite einen in die Ebene der Schale abgekanteten Verbindungsflansch aufweisen, der für die Zwecke des Durchführens von Befestigern genutzt wird. Die durch einen solchen Verbindungsflansch bereitgestellte Fläche kann auch genutzt werden, sollte eine Klebeverbindung vorgesehen sein. Im Falle einer Fügeverbindung zwischen der Stoßabsorptionsstruktur und einer der beiden Schalen des Hilfsrahmens werden grundsätzlich für die Fixierung der Stoßabsorptionsstruktur innerhalb des Schaleninnenraums des Hilfsrahmens keine zusätzlichen Befestiger oder dergleichen benötigt. Neben diesem Umstand und vor allem auch aufgrund der sich ergänzenden Funktionalitäten ist das Gewicht einer solchen Baugruppe gegenüber herkömmlichen gattungsgemäßen Baugruppen nicht unerheblich reduziert. Versuchsauslegungen haben gezeigt, dass sich eine Gewichtsersparnis ohne weiteres realisieren lässt.

Ferner sind, beispielsweise im Bereich der Elektromobilität, häufig in den Unterboden des Kraftfahrzeugs zusätzlich Energiespeicher eingebracht, wodurch der Massenschwerpunkt des Kraftfahrzeugs niedriger ist als bei herkömmlichen Fahrzeugen und der untere Lastpfad an zusätzlicher Bedeutung gewinnt. Insofern können mit der beschriebenen Baugruppe mehr Freiheitsgrade in der Auslegung eines Crashverhaltens eröffnet werden, indem beispielsweise die Crashfunktion der Längsträger wenigstens teilweise in den Hilfsrahmen verlagert werden kann. Mit anderen Worten kann durch die Integration der Stoßabsorptionsstruktur oder zumindest eines Teils derselben in den Hilfsrahmen und durch die Beteiligung des Hilfsrahmens in die Funktionalität "Stoßabsorption" die Crashperformance vorteilhaft beeinflusst werden.

Die im Rahmen dieser Ausführungen benutzten Begriffe, die sich auf eine Fahrzeugrichtung beziehen, und zwar die x-Richtung, die y-Richtung und die z-Richtung sind wie folgt zu verstehen: Bei der x-Richtung handelt es sich um die Richtung der Längsachse des Fahrzeuges. Die y-Richtung ist die hierzu horizontale Querrichtung. Bei der z-Richtung handelt es sich um die Richtung in Richtung der Fahrzeughöhe.

Nachfolgend ist die Erfindung anhand von Ausführungsbeispielen unter Bezugnahme auf die beigefügten Figuren beschrieben. Es zeigen:
- **Fig. 1:**: Eine schematisierte perspektivische Darstellung nach Art einer Explosionsdarstellung einer Baugruppe, umfassend einen in Schalenbauweise ausgeführten Hilfsrahmen sowie eine darin integrierte Stoßabsorptionsstruktur,
- **Fig. 2:**: einen mittigen Längsschnitt durch die zusammengesetzte Baugruppe der Figur 1 und
- **Fig. 3:**: eine perspektivische Ansicht einer weiteren Ausgestaltung einer erfindungsgemäßen Baugruppe als Einsicht in diese.

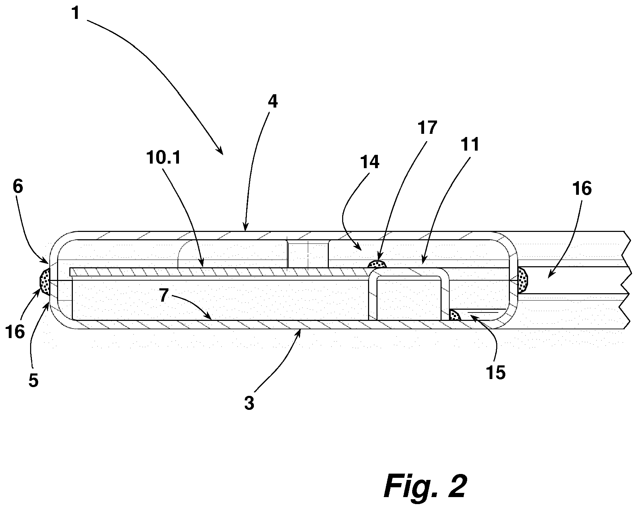

Eine Baugruppe 1 für ein Kraftfahrzeug umfasst einen Vorderachsträger als Hilfsrahmen 2. Der Hilfsrahmen 2 ist in Schalenbauweise ausgeführt. Bei dem dargestellten Ausführungsbeispiel wird der Hilfsrahmen 2 durch eine untere Schale 3 und eine obere Schale 4 gebildet. Bei den beiden Schalen 3, 4 handelt es sich um geformte Metallplatinen, wobei diese bei dem dargestellten Ausführungsbeispiel aus einer Aluminiumlegierung hergestellt sind. Die für die Schalen 3, 4 verwendete Aluminiumlegierung ist eine solche, die den über das Fahrwerk in den Hilfsrahmen 2 eingekoppelten Kräften standhält. Die Schalen 3, 4 weisen jeweils einen aus der Ebene der jeweiligen Schale 3, 4 in Richtung zu der jeweils anderen Schale 4, 3 abgekanteten Seitenwandabschnitt 5, 6 auf. Die Summe der Höhe der beiden Seitenwandabschnitte 5, 6 definiert den Abstand der Grundplatten 7, 8 der Schalen 3, 4 voneinander, da die Seitenwandabschnitte 5, 6 der beiden Schalen 3, 4 auf Stoß zur Ausbildung des Hilfsrahmens 2 zueinander angeordnet sind. Zum Ausbilden des Hilfsrahmens 2 stoßen die Stirnseiten der Seitenwandabschnitte 5, 6 aneinander und werden an ihrer Außenseite umlaufend miteinander verschweißt. Durch die untere Schale 3 und die obere Schale 4 wird ein Schaleninnenraum gebildet (s. Figur 2). Denkbar ist an dieser Stelle aber auch, dass Seitenwandabschnitte überlappend angeordnet oder über an den Stirnseiten nach außen abgestellten Flanschen miteinander verbunden sind.

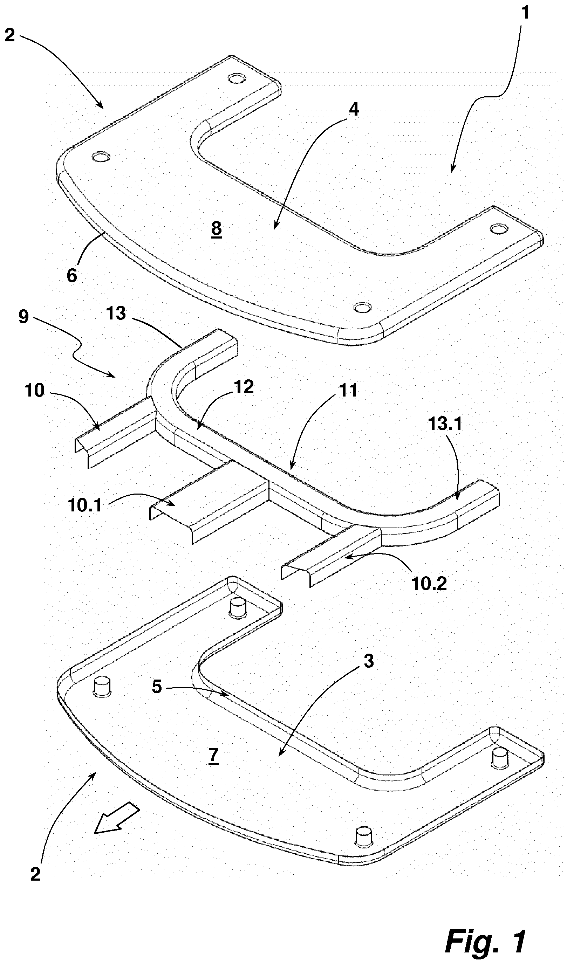

Der Hilfsrahmen 2 ist in Figur 1 lediglich schematisiert gezeigt. Dieser kann weitere Ausformungen zum Anschluss beispielsweise von Teilen einer Radaufhängung oder auch anderen Teilen umfassen. Da diese in Bezug auf eine Beschreibung der beanspruchten Erfindung nicht von Interesse sind, sind derartige weitere Bestandteile der Einfachheit halber in den Figuren weggelassen.

Neben dem Hilfsrahmen 2 umfasst die Baugruppe 1 eine Stoßabsorptionsstruktur 9. Bei dem dargestellten Ausführungsbeispiel umfasst die Stoßabsorptionsstruktur 9 drei Stoßabsorptionselemente 10, 10.1, 10.2. Die Stoßabsorptionselemente 10, 10.1, 10.2 sind als U-förmige Profile ausgeführt, deren Ausrichtung in x-Richtung der Baugruppe 1 bzw. des Fahrzeuges weisen, in das die Baugruppe 1 integriert werden soll. Bei den Stoßabsorptionselementen 10, 10.2 handelt es sich um solche, die etwa, der Längserstreckung der Längsträger des Fahrzeuges folgen, beispielsweise bis zu 20 Grad abgewinkelt sein können. Diese weisen eine geringere Querschnittsfläche auf, als das mittig zwischen diesen beiden Stoßabsorptionselementen 10, 10.2 angeordnete weitere Stoßabsorptionselement 10.1. Dieses befindet sich in der Mitte der Baugruppe 1 und somit ebenfalls in der Mitte des Fahrzeuges. Die Stoßabsorptionselemente 10, 10.1, 10.2 sind mit ihrer von dem stoßempfangenden, in Figur 1 freien Ende wegweisenden Ende an einen Stoßabsorptionselementträger 11 angeschlossen. Bei dem Stoßabsorptionselementträger 11 handelt es sich ebenfalls um ein U-förmiges Profil, welches eine sich in y-Richtung erstreckende Basis 12 und zwei in x-Richtung umgebogene Schenkel 13, 13.1 aufweist. Die Stoßabsorptionselemente 10, 10.1, 10.2 sind durch eine Schweißnaht mit dem Stoßabsorptionselementträger 11 verbunden. Diese ist in Figur 2 mit dem Bezugszeichen 17 kenntlich gemacht. Das Material, aus dem die Stoßabsorptionselemente 10, 10.1, 10.2 und der Stoßabsorptionselementträger 11 gefertigt sind, ist ebenfalls eine Aluminiumlegierung. Bei dem dargestellten Ausführungsbeispiel wird für die Herstellung der Stoßabsorptionselemente 10, 10.1, 10.2 und des Stoßabsorptionselementträgers 11 eine Legierung aus der 5000er oder 6000er Gruppe gemäß der Einteilung der Aluminum Association eingesetzt. Die Geometrie des Stoßabsorptionselementträgers 11 folgt der Geometrie der entgegen der Vorwärtsfahrrichtung geöffneten, C-förmig ausgelegten Schalen 3, 4. Die Fahrtrichtung eines Fahrzeuges, in welches die Baugruppe 1 zu integrieren ist, ist in Figur 1 mit einem Blockpfeil kenntlich gemacht. Dieses entspricht zugleich der x-Richtung.

In einem in den Figuren nicht dargestellten Ausführungsbeispiel sind die Stoßabsorptionselemente in den Stoßabsorptionselementträger zumindest abschnittsweise eingesteckt und stützen sich an dessen Rückwand und/oder zumindest an dessen Vorderwand ab. In einer anderen Ausgestaltung ist vorgesehen, dass die Stoßabsorptionsstruktur zwei Stoßabsorptionselemente umfasst, die jeweils verkröpft sind. Die Verkröpfung ist in y-Richtung ausgeführt, sodass die beiden Stoßabsorptionselemente einen in Richtung der zu empfangenden und zu absorbierenden Energie weisenden Abschnitt umfassen, in dem die beiden Stoßabsorptionselemente näher voneinander beanstandet sind als in dem anderen Abschnitt. Die Verkröpfung ist typischerweise S-förmig ausgeführt. Verbunden sind diese beiden Stoßabsorptionselemente durch einen in y-Richtung verlaufenden, zwischen diesen angeordneten Stoßabsorptionselementträger, der die beiden Stoßabsorptionselemente verbindet. Diese Verbindung ist typischerweise aus Richtung eines zu empfangenden Stoßes gesehen vor, nach oder im Bereich des Beginns der Verkröpfung angeordnet.

In einer weiteren nicht gezeigten Ausführungsform sind die Stoßabsorptionselemente ohne Verkröpfung ausgebildet und über einen in y-Richtung betrachtet dazwischen angeordneten Stoßabsorptionselementträger verbunden.

Die Stoßabsorptionsstruktur 9 ist zum Aufbau der Baugruppe 1 in den Schaleninnenraum 14 des Hilfsrahmens 2 integriert und darin unverrückbar angeordnet. Bei dem in Figuren 1 und 2 gezeigten Ausführungsbeispiel ist die Stoßabsorptionsstruktur 9 mit seinen Stoßabsorptionselementen 10, 10.2, 10.2 und seinem Stoßabsorptionselementträger 11 mit der unteren Schale 3 an bestimmten Positionen verschweißt. Verschweißt ist die Stoßabsorptionsstruktur 9 mit der Schale 3 beispielsweise an der Rückseite des Stoßabsorptionselementträgers. In Figur 2 ist diese Schweißnaht mit dem Bezugszeichen 15 kenntlich gemacht. Ein Verschweißen der Stoßabsorptionsstruktur 9 mit der unteren Schale 3 kann auch an sämtlichen Kontaktkanten erfolgen. Deutlich wird aus der Figur 2 erkennbar, dass die U-förmigen Stoßabsorptionselemente 10, 10.1, 10.2 in Figur 2 anhand des mittleren Stoßabsorptionselementes 10.1 zur Ausbildung eines Kastenprofiles durch die Platte 7 der unteren Schale 3 komplettiert werden. Auch dieses führt zu einer Reduzierung des Gesamtgewichtes der Baugruppe 1. Durch die bereits vorbeschriebene Schweißverbindung zwischen der oberen Schale 4 und der unteren Schale 3, die entlang der Stöße der Seitenwandabschnitte 5, 6 durchgeführt worden ist, ist im Querschnitt durch die Schalen 3, 4 ein Kastenprofil gebildet. In Figur 2 ist die die Schalen 3, 4 verbindende Schweißnaht mit dem Bezugszeichen 16 angegeben. Die Querschnittsgeometrie des Hilfsrahmens 2, insbesondere seine Höhe haben Einfluss auf die aufzunehmenden Kräfte und das Verhalten des Hilfsrahmens 2 und damit der gesamten Baugruppe 1 bei einer Aufnahme von darauf einwirkenden Fahrwerkskräften. Infolge der Integration der Stoßabsorptionsstruktur 9 in dieses Kastenprofil des Hilfsrahmens 2 erfährt dieses eine Verstärkung. Man wird diese ergänzende Funktionalität vorzugsweise dazu nutzen, dass für die jeweils gewünschten Eigenschaften die beiden Bestandteile der Baugruppe in ihrem Zusammenwirken - der Hilfsrahmen 2 sowie die Stoßabsorptionsbaugruppe 9 - den darauf einwirkenden Kräften in der gewünschten Art und Weise standhalten. So ist, wie bereits vorbeschrieben, die Stoßabsorptionsstruktur 9 bei einem normalen Fahrgebrauch eines Fahrzeuges mit der Baugruppe 1 an der Aufnahme von Fahrwerkskräften beteiligt. Umgekehrt ist im Falle eines Aufpralles der Hilfsrahmen 2 mit seinen beiden Schalen 3, 4 an einer Kraftabsorption beteiligt. In Figur 2 ist auch ein Abschnitt der bereits zuvor angesprochenen Schweißnaht 17 in Bezug auf das Stoßabsorptionselement 10.1 erkennbar, mit der dieses an die Basis 12 des Stoßabsorptionselementträgers 11 verbunden ist. Die Schweißnaht 17 folgt der U-förmigen Profilierung des Stoßabsorptionselementes 10.1. In gleicher Weise sind auch die beiden anderen Stoßabsorptionselemente 10, 10.2 an den Stoßelementabsorptionsträger 11 angebunden. Zwingend erforderlich ist diese Schweißnaht allerdings nicht, vielmehr kann darauf in einem nicht gezeigten Ausführungsbeispiel zumindest abschnittsweise oder vollständig verzichtet werden, sofern eine Fixierung in x-, y- und z-Richtung gewährleistet ist.

Sollte es gewünscht sein, das Crashmanagement anders auszulegen, als dieses durch die Baugruppe 1 bereitgestellt ist, können an den Hilfsrahmen 2 zusätzliche Stoßabsorptionselemente (Crashboxen) angeordnet sein, die einen Stoßfänger tragen. Vorzugsweise ist bei einer solchen Ausgestaltung vorgesehen, dass diese weiteren Crashboxen sich bereits bei geringerer, auf diese einwirkende Kraft als Folge eines Aufprallstoßes verformen.

Auch wenn in dem vorbeschriebenen Ausführungsbeispiel die Baugruppe 1 bzw. der Hilfsrahmen zum Anschließen der Vorderräder eines Fahrzeuges beschrieben ist, lässt sich das darin offenbarte Konzept gleicherweise für einen Hinterachsträger verwirklichen, der im Rahmen dieser Ausführungen ebenfalls als Hilfsrahmen angesprochen ist.

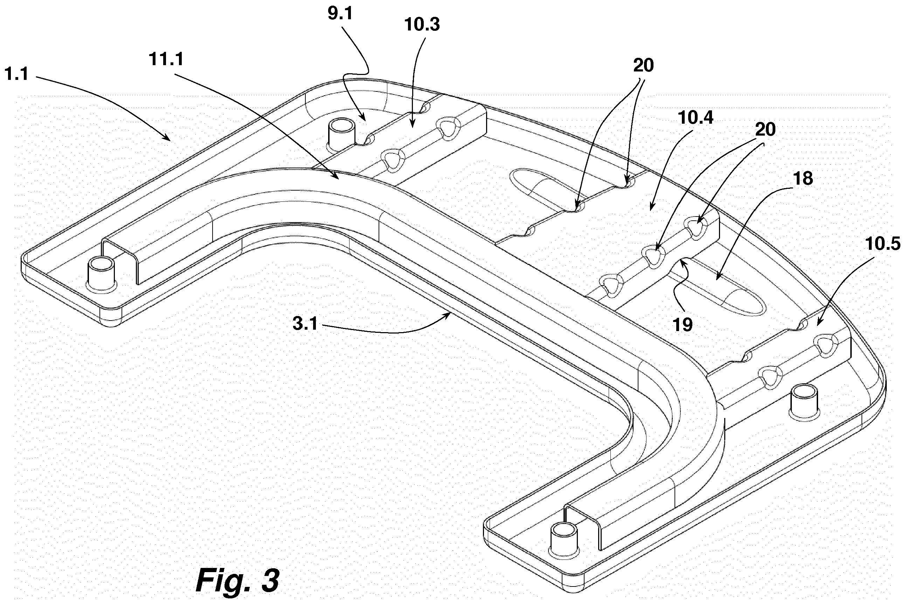

Figur 3 zeigt in einer perspektivischen Einsicht eine weitere Baugruppe 1.1, die prinzipiell aufgebaut ist wie die Baugruppe 1 der Figuren 1 und 2. Daher sind gleich Bauteile mit denselben Bezugszeichen, ergänzt um ein zählerhöheres Suffix angegeben. Die Baugruppe 1.1 unterscheidet sich hinsichtlich der unverrückbaren Fixierung der Stoßabsorptionsstruktur 9.1 in dem Schaleninnenraum des Hilfsrahmens von dem zuvor beschriebenen Ausführungsbeispiel. Bei der Baugruppe 1.1 sind in die Schalen in y-Richtung verlaufende Sicken eingebracht, die das Faltverhalten im Crashfall unterstützen. Bei der Baugruppe 1.1 ist die obere Schale nicht gezeigt, um die Anordnung der Stoßabsorptionsstruktur 9.1 in dem Schaleninnenraum erkennen zu können. Die untere Schale 3.1 trägt eine in Querrichtung und somit in y-Richtung verlaufende Sicke 18. Diese greift ein in eine entsprechende Sickenausnehmung 19, die in die beiden Schenkel des mittleren Stoßabsorptionselementes 10.4 der Baugruppe 1.1 eingreift. Dieses Stoßabsorptionselement 10.4 und ebenso die beiden weiteren Stoßabsorptionselemente 10.3, 10.5 weisen an ihrer zu der in Figur 3 nicht gezeigten oberen Schale weisenden Rücken am Übergang von dem jeweiligen Rücken in die Schenkel Einprägungen 20 auf, die das Faltverhalten im Crashfall unterstützen und die Crashperformance steigern. Diese Sicken können aber auch anderweitig ausgeführt sein und beispielsweise auch über den gesamten Rücken verlaufen. Durch den Eingriff der Sicke 18 der unteren Schale 3.1 in die Sickenausnehmung 19 erfolgt eine Fixierung in x-Richtung.

Durch die in die untere Schale 3.1 und die obere Schale (in Figur 3 nicht dargestellt) eingebrachten und in y-Richtung verlaufenden Sicken dienen diese im Falle einer Stoßabsorption (im Crashfall) auch zur gezielten Steuerung einer Faltenbildung in den Schalen. Zu diesem Zweck ist die in die untere Schale 3.1 eingebrachte Sicke 18 versetzt zu den Sicken der Sickenreihen in der oberen Schale angeordnet.

Die Stoßabsorptionselemente 10.3, 10.4, 10.5 sind im Bereich ihres rückwärtigen, an den Stoßelementabsorptionsträger 11.1 grenzenden Endes mit diesem verschweißt, wie dieses zu dem Ausführungsbeispiel der Figuren 1 und 2 beschrieben worden ist.

Bei dem in Figur 3 dargestellten Ausführungsbeispiel - gleiches gilt auch für das zuvor beschriebene Ausführungsbeispiel - sind zwei der drei Stoßabsorptionselemente, und zwar die Stoßabsorptionselemente 10.3 und 10.5 mit Abstand zur Mittellängsachse der Baugruppe 1.1 angeordnet. Dabei sind diese beiden äußeren Stoßabsorptionselemente 10.3, 10.5 angeordnet, damit diese mit jeweils einem Längsträgerabschnitt des Fahrzeuges, in den die Baugruppe 1.1 eingebaut sind, in x-Richtung etwa fluchtend oder mit einem geringen Versatz zu einem Abschnitt derselben ausgerichtet sind. Daher ist der Abstand dieser Stoßelementabsorptionselemente 10.3, 10.5 von der Längsachse der Baugruppe 1.1 größer als deren Abstand von dem Abschluss der Baugruppe 1.1 in y-Richtung.

Die Beschreibung der Ausführungsbeispiele verdeutlicht, dass aufgrund der modularen Auslegung der beschriebenen Baugruppe diese durch entsprechende Variation in der Auslegung der Schalen und/oder der Auslegung der Stoßabsorptionsstruktur in besonderem Maße an die jeweiligen Erfordernisse angepasst werden kann. Die Integration der Stoßabsorptionsstruktur in den Hilfsrahmen zur Ausbildung der Baugruppe erlaubt zudem die Ausbildung einer Vielzahl von Lastpfaden, vor allem auch solcher, die mit bisher bekannten Baugruppen dieser Art nicht möglich waren. Die Integration der Stoßabsorptionsstruktur in den Schaleninnenraum bewirkt zugleich, dass die Stoßabsorptionselemente im Lastfalle nicht ausknicken, was die Crashperformance herabsetzen würde.

In den beschriebenen Ausführungsbeispielen weisen die Stoßabsorptionselemente jeweils eine U-förmige Querschnittsprofilierung auf, ebenso wie der Stoßabsorptionselementträger. Die Querschnittsgeometrie kann auch anders ausgelegt sein, beispielsweise kann es sich auch um geschlossene Kastenprofile oder hutförmige Profile bei den Stoßabsorptionselementen handeln, nur um einige Ausgestaltungen zu nennen, die neben zahlreichen anderen Querschnittsgeometrien zur Realisierung des Stoßabsorptionselementträgers verwendet werden können.

### Bezugszeichenliste

- 1, 1.1: Baugruppe
- 2: Hilfsrahmen
- 3, 3.1: Untere Schale
- 4: Obere Schale
- 5: Seitenwandabschnitt
- 6: Seitenwandabschnitt
- 7: Grundplatte
- 8: Grundplatte
- 9, 9.1: Stoßabsorptionsstruktur
- 10, 10.1-10.5: Stoßabsorptionselement
- 11: Stoßabsorptionselementträger
- 12: Basis
- 13, 13.1: Schenkel
- 14: Schaleninnenraum
- 15: Schweißnaht
- 16: Schweißnaht
- 17: Schweißnaht
- 18: Sicke
- 19: Sickenausnehmung
- 20: Einprägung

## Patentansprüche

1. Baugruppe für ein Kraftfahrzeug mit einem Hilfsrahmen (2) zum Anschließen einer Radaufhängung, welcher Hilfsrahmen (2) in Schalenbauweise ausgeführt ist und eine obere Schale (4) und eine untere Schale (3, 3.1) aufweist, welche Schalen einen Schaleninnenraum (14) einschließen und starr miteinander verbunden sind, und mit einer Stoßabsorptionsstruktur (9, 9.1), wobei die Stoßabsorptionsstruktur (9, 9.1) ganz oder teilweise in den Schaleninnenraum (14) des Hilfsrahmens (2) nach Art eines Einlegers integriert und unverrückbar darin angeordnet ist, **dadurch gekennzeichnet,** dassdie Stoßabsorptionsstruktur (9, 9.1) zumindest ein mit seiner Längserstreckung in x-Richtung des Fahrzeuges ausgerichtetes Stoßabsorptionselement (10, 10.1, 10.2; 10.3, 10.4, 10.5) umfasst.

2. Baugruppe nach Anspruch 1, **dadurch gekennzeichnet, dass** die Stoßabsorptionsstruktur (9, 9.1) in x-Richtung des Fahrzeuges ausgerichtete, voneinander beabstandete Stoßabsorptionselemente (10, 10.2; 10.3, 10.5) umfasst, welche beiden Stoßabsorptionselemente (10, 10.2; 10.3, 10.5) einen gleichen Abstand von der in x-Richtung verlaufenden Mittellängsachse der Baugruppe (1, 1.1) aufweisen und der Abstand dieser Stoßabsorptionselemente (10, 10.2; 10.3, 10.5) von der Längsachse der Baugruppe (1, 1.1) größer ist als der Abstand dieser Stoßabsorptionselemente (10, 10.2; 10.3, 10.5) von dem Abschluss des Hilfsrahmens (2) in y-Richtung.

3. Baugruppe nach Anspruch 2, **dadurch gekennzeichnet, dass** die voneinander beabstandeten Stoßabsorptionselemente (10, 10.2; 10.3, 10.5) in x-Richtung weitestgehend fluchtender Verlängerung zumindest eines Teilabschnittes eines Längsträgers des Fahrzeuges angeordnet sind.

4. Baugruppe nach Anspruch 2 oder 3, **dadurch gekennzeichnet, dass** mittig zwischen diesen beiden Stoßabsorptionselementen (10, 10.2; 10.3, 10.5) ein weiteres Stoßabsorptionselement (10.1, 10.4) angeordnet ist.

5. Baugruppe nach einem der Ansprüche 1 bis 4, **dadurch gekennzeichnet, dass** die Stoßabsorptionsstruktur (9, 9.1) einen in y-Richtung verlaufenden Stoßabsorptionselementträger (11, 11.1) umfasst, an den das zumindest eine Stoßabsorptionselement (10, 10.1, 10.2; 10.3, 10.4, 10.5) mit seinem dem Stoß empfangenden Ende gegenüberliegenden Ende angeschlossen ist.

6. Baugruppe nach Anspruch 5, **dadurch gekennzeichnet, dass** der Stoßabsorptionselementträger (11, 11.1) C-förmig ausgeführt ist, wobei das zumindest eine Stoßabsorptionselement (10, 10.1, 10.2; 10.3, 10.4, 10.5) an derjenigen Seite an diesen angeschlossen ist, die der Öffnung der C-Struktur gegenüberliegt.

7. Baugruppe nach Anspruch 5 oder 6, **dadurch gekennzeichnet, dass** die Stoßabsorptionselemente an den Stoßabsorptionselementträger anstoßen und sich an dessen Vorderwand abstützen.

8. Baugruppe nach Anspruch 5 oder 6, **dadurch gekennzeichnet, dass** die Stoßabsorptionselemente in den Stoßabsorptionselementträger zumindest abschnittsweise eingesteckt sind und sich an dessen Rückwand und/oder zumindest bereichsweise an dessen Vorderwand abstützen.

9. Baugruppe nach einem der Ansprüche 1 bis 8, **dadurch gekennzeichnet, dass** die Baugruppe zumindest zwei, in x-Richtung des Fahrzeuges ausgerichtete Stoßabsorptionselemente aufweist, die jeweils in weitestgehend fluchtender Verlängerung zumindest eines Abschnittes eines Längsträgers des Fahrzeuges angeordnet sind, welche Stoßabsorptionselemente in y-Richtung verkröpft ausgeführt sind, wobei die mit einem geringeren Abstand zueinander angeordneten Abschnitte dieser beiden Stoßabsorptionselemente in Richtung der zu empfangenden Stoßabsorptionsrichtung weisen und diese Stoßabsorptionselemente durch einen als Querträger ausgelegten Stoßabsorptionselementträger im Bereich des Endabschnittes dieses Abschnittes oder im Anfangsbereich der Verkröpfung die beiden Stoßabsorptionselemente miteinander verbunden sind.

10. Baugruppe nach einem der Ansprüche 5 bis 9, **dadurch gekennzeichnet, dass** der oder die Stoßabsorptionselemente (10, 10.1-10.5) und der Stoßabsorptionselementträger aus demselben Werkstoff gefertigt sind.

11. Baugruppe nach einem der Ansprüche 5 bis 10, **dadurch gekennzeichnet, dass** das zumindest eine Stoßabsorptionselement (10, 10.1-10.5) mit dem Stoßabsorptionslementträger (11, 11.1) durch eine Fügeverbindung verbunden ist.

12. Baugruppe nach einem der Ansprüche 1 bis 11, **dadurch gekennzeichnet, dass** die Stoßabsorptionsstruktur (9, 9.1) in dem Schaleninnenraum (14) des Hilfsrahmens (2) aufgrund zumindest eines mit der oberen Schale (4) und/oder der unteren Schale (3, 3.1) und/oder mit einem die Schale durchdringenden Halteglied bereitgestellten Formschluss in dem Schaleninnenraum (14) unverrückbar gehalten ist.

13. Baugruppe nach einem der Ansprüche 1 bis 12, **dadurch gekennzeichnet, dass** die beiden Schalen aus einem mit dem Material der Stoßabsorptionsstruktur (9, 9.1) unterschiedlichem Material hergestellt sind.

14. Baugruppe nach einem der Ansprüche 1 bis 13, **dadurch gekennzeichnet, dass** der Hilfsrahmen (2) C-förmig mit seiner Öffnung entgegen der Vorwärtsfahrrichtung oder der Rückwärtsfahrrichtung des Fahrzeuges ausgeführt ist.

## Claims

1. Assembly for a motor vehicle with a subframe (2) for connection to a wheel suspension unit, said subframe (2) being configured in a shell format, and comprising an upper shell (4) and a lower shell (3, 3.1), said shells enclosing a shell interior (14) and being rigidly connected to one another, and with an impact absorption structure (9, 9.1), wherein the impact absorption structure (9, 9.1) is integrated wholly or partially into the shell interior (14) of the subframe (2) in the form of an insert and is arranged therein in an unshakeable manner, **characterised in that** the impact absorption structure (9, 9.1) comprises at least one impact absorption element (10, 10.1, 10.2; 10.3, 10.4, 10.5) which is aligned with its longitudinal extension in the x-direction of the vehicle.

2. Assembly according to claim 1, **characterised in that** the impact absorption structure (9, 9.1) comprises impact absorption elements (10, 10.2, 10.3, 10.5) spaced apart from one another and aligned in the x-direction of the vehicle, which two impact absorption elements (10, 10.2; 10.3, 10.5) exhibit an equal distance interval from the mid-axis of the assembly (1, 1.1) running in the x-direction, and the distance interval of these impact absorption elements (10, 10.2; 10.3, 10.5) from the longitudinal axis of the assembly (1, 1.1) is greater than the distance interval of these impact absorption elements (10, 10.2, 10.3, 10.5) from the termination of the subframe (2) in the y-direction.

3. Assembly according to claim 2, **characterised in that** the impact absorption elements (10, 10.2, 10.3, 10.5) spaced apart from one another are arranged in the x-direction with the most flush-aligned extension possible of at least a part section of a longitudinal fame side member of the vehicle.

4. Assembly according to claim 2 or 3, **characterised in that** a further impact absorption element (10.1, 10.4) is arranged in the middle between these two impact absorption elements (10, 10.2; 10.3, 10.5).

5. Assembly according to any one of claims 1 to 4, **characterised in that** the impact absorption structure (9, 9.1) comprises an impact absorption element carrier (11, 11.1) running in the y-direction, attached to which is the at least one impact absorption element (10, 10.1, 10.2; 10.3, 10.4, 10.5) by its end which is opposite to the end which absorbs impact.

6. Assembly according to claim 5, **characterised in that** the impact absorption element carrier (11, 11.1) is configured in a C-shape, wherein the at least one impact absorption element (10, 10.1, 10.2; 10.3, 10.4, 10.5) is connected to that side which is opposite the opening of the C-structure.

7. Assembly according to claim 5 or 6, **characterised in that** the impact absorption elements are in abutment contact with the impact absorption element carrier and are supported on its front wall.

8. Assembly according to claim 5 or 6, **characterised in that** the impact absorption elements are at least in sections inserted into the impact absorption element carrier, and are supported on its rear wall and/or at least in some areas on its front wall.

9. Assembly according to any one of claims 1 to 8, **characterised in that** the assembly comprises at least two impact absorption elements aligned in the x-direction of the vehicle, which in each case are arranged in the most flush-aligned extension possible of at least a part section of a longitudinal fame side member of the vehicle, said impact absorption elements being configured as offset in the y-direction, wherein the sections which are arranged with the shortest distance interval from one another of these two impact absorption elements point in the direction of the impact absorption receiving direction, and these two impact absorption elements are connected to one another by an impact absorption element carrier, configured as a transverse carrier, in the region of the end section of this section or in the beginning area of the offset arrangement. (the two impact absorption elements, superfluous)

10. Assembly according to any one of claims 5 to 9, **characterised in that** the impact absorption element(s) (10, 10.1-10.5) and the impact absorption element carrier are made of the same material.

11. Assembly according to any one of claims 5 to 10, **characterised in that** the at least one impact absorption element (10, 10.1-10.5) is connected to the impact absorption element carrier (11, 11.1) by a joint connection.

12. Assembly according to any one of claims 1 to 11, **characterised in that** the impact absorption structure (9, 9.1) is held unshakeably in the shell interior (14) of the subframe (2) by way of at least one positive fit connection with the upper shell (4) and/or the lower shell (3, 3.1) and/or with a retaining member which penetrates through the shell, in the shell interior (14).

13. Assembly according to any one of claims 1 to 12, **characterised in that** the two shells are manufactured from a material which is different from the material of the impact absorption structure (9, 9.1).

14. Assembly according to any one of claims 1 to 13, **characterised in that** the subframe (2) is configured in a C-shape, with its opening opposite to the forwards direction of travel or the backwards direction of travel of the vehicle.

## Revendications

1. Ensemble pour un véhicule comprenant un châssis secondaire (2) destiné à être rattaché à une suspension de roue, lequel châssis secondaire (2) est réalisé avec une structure coque et présente une coque supérieure (4) et une coque inférieure (3, 3.1), lesquelles coques englobent un espace intérieur (14) de coque et sont reliées de manière rigide l'une à l'autre, et comprenant une structure d'absorption de chocs (9, 9.1), laquelle structure d'absorption de chocs (9, 9.1) est intégrée totalement ou partiellement à l'espace intérieur (14) de coque du châssis secondaire (2) à la manière d'un insert et est disposée dans celui-ci sans possibilité de déplacement, **caractérisé en ce que** la structure d'absorption de chocs (9, 9.1) comprend au moins un élément d'absorption de chocs (10, 10.1, 10.2 ; 10.3, 10.4, 10.5) orienté dans son étendue longitudinale dans le sens x du véhicule.

2. Ensemble selon la revendication 1, **caractérisé en ce que** la structure d'absorption de chocs (9, 9.1) comporte des éléments d'absorption de chocs (10, 10.2 ; 10.3, 10.5) orientés dans le sens x du véhicule, placés à distance l'un de l'autre, lesquels deux éléments d'absorption de chocs (10, 10.2 ; 10.3, 10.5) présentent une même distance par rapport à l'axe longitudinal médian de l'ensemble (1, 1.1) qui s'étend dans le sens x et que la distance de ces éléments d'absorption de chocs (10, 10.2 ; 10.3, 10.5) par rapport à l'axe longitudinal de l'ensemble (1, 1.1) est plus grande que la distance de ces éléments d'absorption de chocs (10, 10.2 ; 10.3, 10.5) par rapport à l'extrémité du châssis secondaire (2) dans le sens y.

3. Ensemble selon la revendication 2, **caractérisé en ce que** les éléments d'absorption de chocs (10, 10.2; 10.3, 10.5) à distance les uns des autres sont disposés dans le sens x dans le prolongement sensiblement aligné d'au moins un tronçon partiel d'un longeron d'un véhicule.

4. Ensemble selon la revendication 2 ou 3, **caractérisé en ce qu'** un autre élément d'absorption de chocs (10.1, 10.4) est disposé, au milieu, entre ces deux éléments d'absorption de chocs (10, 10.2; 10.3, 10.5).

5. Ensemble selon l'une des revendications 1 à 4, **caractérisé en ce que** la structure d'absorption de chocs (9, 9.1) comporte un support (11, 11.1) d'éléments d'absorption de chocs s'étendant dans le sens y, sur lequel est raccordé l'au moins un élément d'absorption de chocs (10, 10.1, 10.2; 10.3, 10.4, 10.5) par son extrémité opposée à l'extrémité qui va recevoir le choc.

6. Ensemble selon la revendication 5, **caractérisé en ce que** le support (11, 11.1) d'éléments d'absorption de chocs est conformé en C, l'au moins un élément d'absorption de chocs (10, 10.1, 10.2 ; 10.3, 10.4, 10.5) étant raccordé à celui-ci par le côté opposé à l'ouverture de la structure en C.

7. Ensemble selon la revendication 5 ou 6, **caractérisé en ce que** les éléments d'absorption de chocs sont en contact avec le support d'éléments d'absorption de chocs et qu'ils s'appuient sur sa paroi avant.

8. Ensemble selon la revendication 5 ou 6, **caractérisé en ce que** les éléments d'absorption de chocs sont enfichés au moins par tronçons dans le support d'éléments d'absorption de chocs et s'appuient sur sa paroi arrière et/ou au moins par zone sur sa paroi avant.

9. Ensemble selon l'une des revendications 1 à 8, **caractérisé en ce que** l'ensemble présente au moins deux éléments d'absorption de chocs orientés dans le sens x du véhicule, lesquels sont disposés respectivement dans le prolongement sensiblement aligné d'au moins un tronçon d'un longeron d'un véhicule, lesquels éléments d'absorption de chocs sont configurés recourbés dans le sens y, les tronçons de ces ceux éléments d'absorption de chocs, disposés à faible distance les uns des autres, étant orientés dans le sens du choc à absorber et ces éléments d'absorption de chocs étant reliés l'un à l'autre au niveau du tronçon d'extrémité de ce tronçon par un support d'éléments d'absorption de chocs conformé en essieu ou ces deux éléments d'absorption de chocs étant reliés l'un à l'autre au niveau de la zone du début du recourbement.

10. Ensemble selon l'une des revendications 5 à 9, **caractérisé en ce que** le ou les éléments d'absorption de chocs (10, 10.1-10.5) et le support d'éléments d'absorption de chocs sont fabriqués dans le même matériau

11. Ensemble selon l'une des revendications 5 à 10, **caractérisé en ce que** l'au moins un élément d'absorption de chocs (10, 10.1-10.5) est relié au support (11, 11.1) d'éléments d'absorption de chocs par jointage.

12. Ensemble selon l'une des revendications 1 à 11, **caractérisé en ce que** la structure d'absorption de chocs (9, 9.1) est maintenue sans possibilité de déplacement dans l'espace intérieur (14) de coque du châssis secondaire (2) en raison d'au moins une complémentarité de forme mise à disposition par un élément qui maintient la coque supérieure (4) et/ou la coque inférieure (3, 3.1) et/ou qui traverse la coque.

13. Ensemble selon l'une des revendications 1 à 12, **caractérisé en ce que** les deux coques sont fabriquées dans un matériau qui diffère du matériau de la structure d'absorption de chocs (9, 9.1).

14. Ensemble selon l'une des revendications 1 à 13, **caractérisé en ce que** le châssis secondaire (2) est réalisé en forme de C, avec son ouverture orientée dans le sens contraire de la marche avant ou dans le sens de la marche arrière du véhicule.
